## Europäisches Patentamt
## European Patent Office
## Office européen des brevets

(19)

(11) Numéro de publication : **0 018 240**
**B1**

(12)

# FASCICULE DE BREVET EUROPÉEN

(45) Date de publication du fascicule du brevet :
19.05.82

(51) Int. Cl.³ : **F 16 B 21/09// B60K15/02**

(21) Numéro de dépôt : **80400208.7**

(22) Date de dépôt : **12.02.80**

(54) **Fixation pour conteneur suspendu.**

(30) Priorité : 29.03.79 FR 7907857

(43) Date de publication de la demande :
29.10.80 (Bulletin 80/22)

(45) Mention de la délivrance du brevet :
19.05.82 Bulletin 82/20

(84) Etats contractants désignés :
**DE GB IT**

(56) Documents cités :
**DE - A - 2 736 127**
**FR - A - 1 156 422**
**FR - A - 1 591 688**
**US - A - 1 454 597**
**US - A - 2 640 246**

(73) Titulaire : **SOCIETE ANONYME AUTOMOBILES CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Drouet, Jacques**
**Place de l'Eglise**
**F-60210 Le Mesnil-Conteuille (FR)**

(74) Mandataire : **Masseron, Georges**
**CENTRE TECHNIQUE CITROEN Chemin Vicinal No 2**
**F-78140 Velizy-Villacoublay (FR)**

EP 0 018 240 B1

Imprimerie Jouve, 18, rue St-Denis, 75001 Paris, France

Fixation pour conteneur suspendu

La présente invention concerne un dispositif d'attache propre à assurer la fixation d'un conteneur suspendu tel qu'un réservoir à carburant par exemple.

Il est connu de suspendre et d'immobiliser sous un support un conteneur au moyen de brides de suspension fixées sur des saillies périphériques solidiares de ce conteneur ; il est également connu de suspendre un conteneur par des sangles enveloppantes pourvues à leurs extrémités de moyens de fixation assurant l'accouplement avec le support. Or, les dispositifs en question présentent divers inconvénients, tant sur le plan de la commodité d'emploi (montages et démontages laborieux) que sur celui de la stabilité et de la permanence d'immobilisation du conteneur.

L'invention a pour objet un dispositif d'attache pour conteneur suspendu et immobilisé sous un support au moyen de brides fixées sur des appendices saillants à la périphérie de ce conteneur dont le montage et le démontage sont facilités tout en assurant une immobilisation sûre et stable sur le support.

Un dispositif d'attache selon l'invention se caractérise en ce que les appendices, orientés vers l'extérieur du conteneur suivant une direction sensiblement horizontale, coopèrent avec des brides de suspension annulaires élastiquement déformables qui sont munies d'un moyen de fixation sur le support et qui comprtent un évidement central à deux lobes permettant d'engager chacune de ces brides, d'abord dans une position de pré-positionnement puis dans une position de verrouillage sur le conteneur, l'un au moins de chaque couple d'éléments, bride ou appendice, étant élastiquement déformable. De plus, les profils des deux lobes constituant l'évidement central de chaque bride sont avantageusement différents et tels que seul un premier lobe permette le passage d'un appendice du conteneur dans un mouvement latéral de la bride vers la position de prépositionnement et que le deuxième lobe s'ajuste sans jeu sur le corps de l'appendice en position de verrouillage de la bride sur le conteneur. En outre, l'évidement central des brides comporte de préférence un étranglement ou raccordement des deux lobes, étranglement à travers lequel le passage de l'appendice du 1er ou deuxième lobe se fait en force.

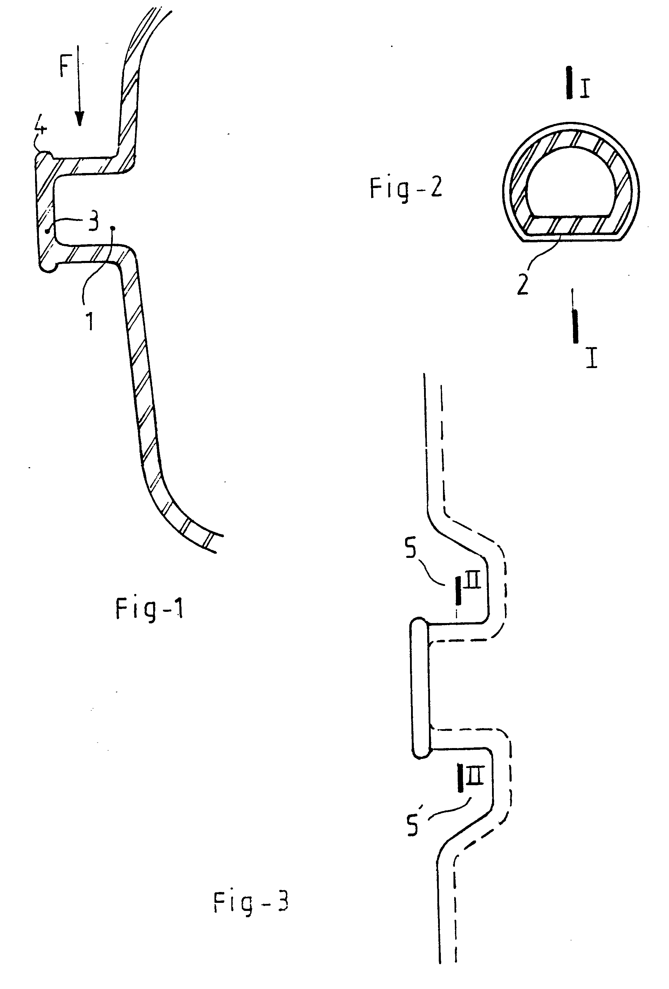

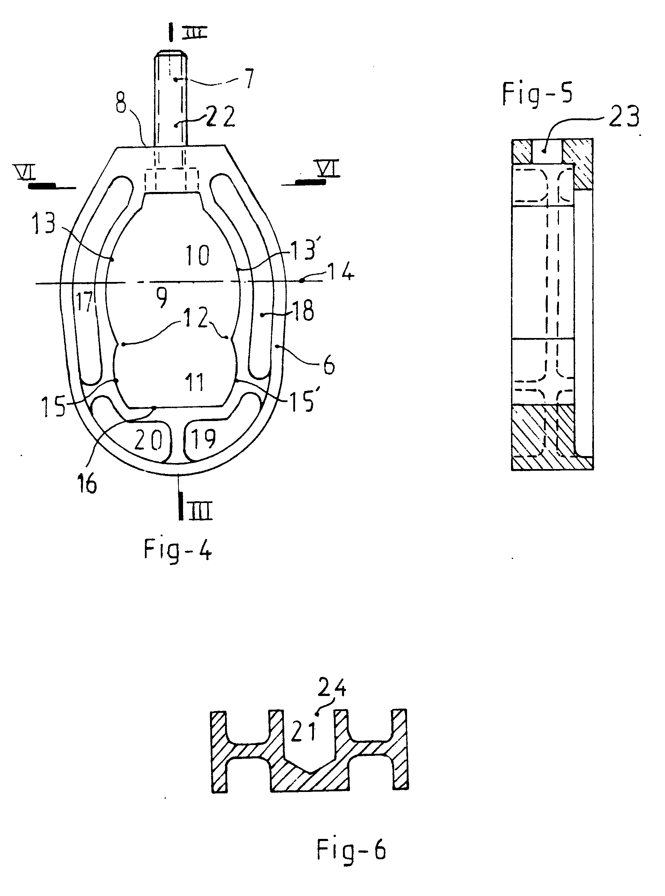

L'invention sera mieux comprise et d'autres caractéristiques apparaîtront à la lecture de la description d'un exemple de réalisation. Dans cet exemple, le conteneur, suspendu et immobilisé, est un réservoir à carburant réalisé en plastique soufflé. Ce réservoir comporte à sa périphérie une pluralité d'appendices de fixation identiques coopérant avec des brides de suspension. On a représenté dans les dessins annexés un .appendice (Fig. 1 à 3) et une bride (Fig. 4 à 6).

La figure 1 est une section verticale partielle du réservoir au droit d'un appendice suivant I-I de la Fig. 2.

La figure 2 est une section transversale d'un appendice suivant II-II de la Fig. 3.

La figure 3 est une vue suivant F de la Fig. 1.

La figure 4 représente une bride vue en élévation.

La figure 5 est une coupe de la bride suivant III-III de la Fig. 4.

La figure 6 est une section suivant VI-VI de la Fig. 4.

Un appendice périphérique d'accrochage se présente (Fig. 1 à 3) sous forme d'une saillie cylindrique évidée 1, orientée de façon sensiblement perpendiculaire à la paroi latérale du conteneur et suivant un plan voisin de l'horizontale ; cet appendice 1 comporte à sa partie inférieure une surface d'appui plane 2 sensiblement horizontale. Un voile frontal 3 ferme l'appendice 1 en formant un bourrelet périphérique 4 qui déborde de la surface extérieure de l'appendice. L'appendice est entouré d'une dépression 5, 5' ménagée dans la paroi du réservoir. La bride annulaire 6 (Fig. 4 à 6), munie à sa partie supérieure d'une vis de fixation 7 et d'une surface plane d'appui 8, comporte un évidement central 9 traversant la bride de part en part. L'évidement 9 est constitué d'un lobe supérieur 10 et d'un lobe inférieur 11 intercommuniquants au niveau d'un étranglement 12.

Le lobe supérieur 10 est limité latéralement par des parois curvilignes concaves 13, 13' dont l'écartement et la courbure sont tels que le bourrelet 4 de l'appendice 1 puisse traverser ce lobe dans un mouvement latéral de la bride de la gauche vers la droite (Fig. 1), l'axe de l'appendice étant aligné sur l'intersection des axes III-III et 14 de la Fig. 4.

Le lobe inférieur 11 est limité latéralement par des parois curvilignes 15, 15' et, à la partie inférieure, par une surface plane 16 parallèle à la surface 8. Les surfaces 15, 15' et 16 sont telles qu'elles peuvent envelopper sans jeu le corps d'appendice 1 mais interdisent toute pénétration latérale du bourrelet 4.

La largeur de l'étranglement 12 est inférieure à la plus grande dimension transversale du corps de l'appendice 1. Les évidements bilatéraux 17, 18 et 19, 20 sont disposés de telle sorte que la déformabilité élastique de la bride soit suffisante au niveau de l'étranglement 12 pour permettre le passage en force de l'appendice 1 du lobe supérieur 10 ou lobe inférieur 11 mais que la bride soit rigide dans la partie inférieure du lobe 11.

A la partie supérieure de la bride une cavité 21, débouchant à la fois sur un flanc de la bride en 24 et au sommet du lobe 10, est conçue pour assurer le logement de la tête hexagonale de la vis 7 qui s'engage à l'intérieur du perçage 23 au centre de la surface d'appui 8. Les parois à facettes de la cavité 21 immobilisent la vis 7 en rotation. La vis peut être immobilisée en translation par un effet de pincement des parois de la cavité 21.

Les opérations de montage d'un dispositif d'attache selon l'invention peuvent se faire de la façon suivante :

1. Engagement latéral d'une bride 6 sur chaque appendice 1 du conteneur au travers du lobe supérieur 10, la bride étant ou non déjà équipée de la vis de fixation 7.

2. Emboîtement des brides 6 et des appendices 1 par passage en force de l'étranglement 12 ; à ce stade les brides sont verrouillées et orientées sur les appendices par le contact sans jeu entre les lobes inférieurs 11 et les corps des appendices 1, et notamment entre les surfaces d'appui planes 2 et 16.

3. On présente ensuite l'ensemble sous le support, puis on procède aux opérations d'accostage et de verrouillage.

On notera que les vis de fixation 7 peuvent être mises en place ou démontées à volonté même si le réservoir se trouve déjà en position d'accostage final grâce au dégagement latéral 24 pratiqué au flanc de la cavité 21 (Fig. 6) qui permet le basculement et le dégagement aisé de la vis 7.

On obtient ainsi un dispositif d'attache pour conteneur suspendu qui améliore la facilité de montage et de démontage et qui assure un positionnement rigoureux et simultané des éléments de fixation tout en permettant des déconnections locales. La stabilité des appuis et la sécurité des verrouillages longitudinaux, transversaux et latéraux garantissent une immobilisation efficace même sous l'action des effets dynamiques rencontrés par exemple sur un véhicule automobile.

Il va de soi que l'invention ne saurait se limiter au mode de réalisation décrit ; c'est ainsi que les brides 6 pourraient être en matériau rigide et que l'élasticité des appendices 1 permettrait le passage en force de l'étranglement 12.

## Revendications

1. Dispositif d'attache pour conteneur suspendu et immobilisé sous un support au moyen de brides évidées (6) suivant un profil à deux lobes (10, 11) fixées sur appendices saillants (1) à la périphérie de ce conteneur, caractérisé en ce que lesdits appendices (1), orientés vers l'extérieur du conteneur suivant une direction sensiblement horizontale, coopèrent avec les brides de suspension annulaires (6) élastiquement déformables, munies d'un moyen de fixation sur le support et dont l'évidement central (9) à deux lobes (10, 11) se raccordant au niveau d'un étranglement (12) de largeur inférieure à la plus grande dimension transversale de chaque appendice (1) permet d'engager chacune de ces brides (6) d'abord dans une position de pré-positionnement puis dans une position de verrouillage sur le conteneur, l'un au moins de chaque élément du couple, bride ou appendice, étant élastiquement déformable.

2. Dispositif d'attache selon la revendication 1, caractérisé en ce que les profils des lobes (10, 11) sont différents tels que seul le premier lobe (10) permette le passage d'un appendice (1) dans un mouvement latéral de la bride (6) vers la position de pré-positionnement et que le deuxième lobe (11) s'ajuste sans jeu sur le corps de l'appendice en position de verrouillage de la bride sur le conteneur.

3. Dispositif d'attache selon la revendication 2, caractérisé en ce que les brides (6) sont élastiquement déformables et que leur élasticité est plus grande au niveau de l'étranglement (12).

4. Dispositif d'attache selon l'une quelconque des revendications 2 à 3, caractérisé en ce que les appendices (1) comportent à leur extrémité un bourrelet (3) dont les dimensions permettent le passage d'une bride (6) latéralement à travers le premier lobe (10) mais interdisent ce passage à travers le deuxième lobe (11).

5. Dispositif d'attache selon l'une quelconque des revendications précédentes, caractérisé en ce que les corps des appendices (1) du conteneur et des lobes (11) des brides de suspension (6) comportent des surfaces d'appui (2, 16) sensiblement horizontales qui coopèrent entre elles en position de verrouillage de ces brides sur le conteneur.

6. Dispositif d'attache selon la revendication 5, caractérisé en ce que les brides (6) comportent à leur partie supérieure une surface plane (8) d'appui sur le support qui est parallèle à la surface d'appui (16) de la bride sur l'appendice et en ce que le moyen de fixation de chaque bride sur le support est constitué d'une vis d'axe perpendiculaire aux surfaces d'appui (2, 16) et passant sensiblement au centre de la surface d'appui (16).

7. Dispositif d'attache selon l'une quelconque des revendications précédentes, caractérisé en ce que les appendices (1) se trouvent encastrés au moins partiellement dans le volume du conteneur au moyen de dépressions périphériques ménagées sur les flancs dudit conteneur.

8. Dispositif d'attache selon l'une quelconque des revendications précédentes, caractérisé en ce que le conteneur et les appendices (1) sont réalisés d'une seule pièce en matière plastique par la méthode dite « de soufflage » et les brides (6) en matière injectée.

## Claims

1. Fastening device for a container suspended and immobilised below a support by means of flanges or members (6) recessed along a profile comprinsing two lobes (10, 11) secured to extensions (1) projecting at the periphery of this container, characterised in that the said extensions (1) which are directed towards the outside of the container along a substantially deformable horizontal direction cooperate with the elastically deformable annular suspension flanges (6) provided with means for fastening to the support and of which the central recess (9) having two lobes (10, 11) joined together at the level of a constriction (12) of smaller width than the largest transverse dimension of each extension (1) makes it possible to engage each of these flanges (6), initially in a presetting position and then in a locked position on the container, at least one element of each pair, a flange or extension, being elastically deformable.

2. Fastening device according to claim 1, characterised in that the outlines of the lobes (10, 11) differ so that only the first lobe (10) allows the passage of an extension (1) in a lateral movement of the flange (6) towards the presetting position, and that the second lobe (11) fits without play on the body of the extension in the position in which the flange is locked on the container.

3. Fastening device according to claim 2, characterised in that the flanges (6) are elastically deformable and that their elasticity is higher at the level of the constriction (12).

4. Fastening device according to claim 2 or 3, characterised in that at their extremities, the extensions (1) comprise a protrusion (3) of which the dimensions allow the passage of a flange (6) laterally through the first lobe (10) but prevent this passage through the second lobe (11).

5. Fastening device according to any one of the preceding claims, characterised in that the bodies of the extensions (1) of the container and the lobes (11) of the suspension flanges (6) comprise substantially horizontal bearing surfaces (2, 16) which co-operate with each other in the position in which these flanges are locked on to the container.

6. Fastening device according to claim 5, characterised in that at their upper section, the flanges (6) have a plane surface (8) for bearing against the bearer which is parallel to the bearing surface (16) of the flange on the extension, and in that the means of securing each flange on the bearer comprise a screw having its axis at right angles to the bearing surfaces (2, 16) and passing substantially through the centre of the bearing surface (16).

7. Fastening device according to any of the preceding claims, characterised in that the extensions (1) are at least partially fitted within the volume of the container by means of peripheral depressions formed in the sides of the said container.

8. Fastening device according to any of the preceding claims, characterised in that the container and the extensions (1) are produced in one piece from plastics material by the so-called « blowing » method, and the flanges (6) are of injected material.

**Ansprüche**

1. Befestigungsvorrichtung für einen Behälter, der unterhalb eines Trägers mittels hohler Bügel (6) aufgehängt und festgelegt ist, die gemäss einem Profil mit zwei Ausbuchtungen (10, 11) ausgehöhlt und an überstehenden Ansätzen (1) am Umfang des Behälters befestigt sind, dadurch gekennzeichnet, dass die im wesentlichen waagrecht zur Aussenseite des Behälters gerichteten Ansätze (1) mit den elastisch verformbaren ringförmigen Aufhängebügeln (6) zusammenarbeiten, die mit einer Einrichtung zur Befestigung am Träger versehen sind und deren zentrale Ausnehmung (9) mit zwei Ausbuchtungen (10, 11), die an einer Verengung (12) aneinandertreffen, deren Breite kleiner als die grösste Querabmessung jedes Ansatzes (1) ist, ein Einsetzen jedes der Bügel (6) zunächst in eine Vorpositionierstellung und dann in eine Verriegelungsstellung am Behälter gestattet, wobei von jedem Element des Paars, wenigstens eines, Bügel oder Ansatz, elastisch verformbar ist.

2. Befestigungsvorrichtung nach Anspruch 1, dadurch gekennzeichnet, dass die Profile des Ausbuchtungen (10, 11) sich derart unterscheiden, dass nur die erste Ausbuchtung (10) den Durchtritt eines Ansatzes (1) bei einer seitlichen Bewegung des Bügels (6) in die Vorpositionierstellung gestattet und dass die zweite Ausbuchtung (11) sich spielfrei auf dem Körper des Ansatzes in Verriegelungsstellung des Bügels am Behälter einstellt.

3. Befestigungsvorrichtung nach Anspruch 2, dadurch gekennzeichnet, dass die Bügel (6) elastisch verformbar sind und dass ihre Elastizität an der Verengung (12) grösser ist.

4. Befestigungsvorrichtung nach einem der Ansprüche 2 und 3, dadurch gekennzeichnet, dass die Ansätze (1) an ihrem Ende einen Wulst (3) haben, dessen Abmessungen den Durchtritt eines Bügels seitlich durch die erste Ausbuchtung (10) gestatten, jedoch diesen Durchtritt durch die zweite Ausbuchtung verbieten.

5. Befestigungsvorrichtung nach einem der vorhergehenden Ansprüche, dadurch gekennzeichnet, dass die Körper der Ansätze (1) des Behälters und die Ausbuchtungen (11) der Aufhängebügel (6) im wesentlichen waagerechte Anlageflächen (12, 16) haben, die in Verriegelungsstellung dieser Bügel am Behälter zusammenarbeiten.

6. Befestigungsvorrrichtung nach Anspruch 5, dadurch gekennzeichnet, dass die Bügel (6) an ihrem Oberteil eine ebene Anlagefläche (8) zur Anlage am Träger haben, die zur Anlagefläche (16) des Bügels für die Anlage am Ansatz parallel ist, und dass die Einrichtung zur Befestigung jedes Bügels am Träger aus einer Schraube besteht, deren Achse parallel zu den Anlageflächen (2, 16) ist und im wesentlichen durch die Mitte der Anlagefläche (16) hindurchtritt.

7. Befestigungsvorrichtung nach einem der vorhergehenden Ansprüche, dadurch gekennzeichnet, dass die Ansätze (1) wenigstens teilweise in das Volumen des Behälters mittels Umfangsvertiefungen eingelassen sind, die an den seitenflächen des Behälters ausgebildet sind.

8. Befestigungsvorrichtung nach einem der vorhergehenden Ansprüche, dadurch gekennzeichnet, dass die Behälter und die Ansätze (1) durch das Blasverfahren einstückig aus Kunststoff und die Bügel (6) aus Spritzgussmaterial hergestellt sind.

Fig-1

Fig-2

Fig-3

Fig-4

Fig-5

Fig-6